# EUROPEAN PATENT SPECIFICATION

(11) **EP 1 635 929 B1**
(45) Date of publication and mention of the grant of the patent: **16.08.2017**
(21) Application number: 03718184.9
(22) Date of filing: 04.04.2003
(51) Int. Cl.: B01D 50/00, B01D 45/14

(54) **POWERED AIR CLEANING SYSTEM AND AIR CLEANING METHOD**
ELEKTRISCHES LUFTREINIGUNGSSYSTEM UND LUFTREINIGUNGSVERFAHREN
SYSTEME ET PROCEDE MOTORISES DE PURIFICATION D'AIR

(43) Date of publication of application: 22.03.2006
(73) Proprietor: Sy-Klone Company, Inc., Jacksonville, FL 32217-2853 (US)
(72) Inventor: MOREDOCK, James, G., Neptune Beach Florida 32266 (US); EHRENBERG, Eric, L., Jacksonville, FL 32257 (US)
(74) Representative: Troesch Scheidegger Werner AG
(86) International application number: PCT/US2003/010238
(87) International publication number: WO 2004/098748

(56) References cited:
- WO-A1-03/033107
- US-A- 4 048 911
- US-B1- 6 319 304

## Description

### TECHNICAL FIELD

The present invention is directed to an improved powered, atmospheric ejective, air cleaning system and air cleaning method for efficiently removing debris from debris laden air to supply clean air to a device with which the system is used. For example, the invention is useful in connection with total air flow applications such as ventilation systems, as a fixed air flow provider for heat exchangers and heating and air conditioning systems, and with devices having a variable air flow demand, particularly internal combustion engines which exert a variable vacuum on their air intake to be supplied with clean air.

### BACKGROUND AND SUMMARY

Document WO 03/033107 A1 discloses a powered air cleaning system and air cleaning method. Document US 6319304 B1 discloses a powered air precleaner device and method for centrifugally ejecting heavier-than-air particulate debris from debris laden air. Document US 4048911 discloses an apparatus operable to separate particulates, as dirt, dust and foreign materials from air.

Air intakes that centrifugally separate heavier-than-air particles from the air to be used in internal combustion engines, ventilation systems, and other apparatus that draw in air laden with debris, are known. The use of in-line filters in air delivery systems to clean the air is also, per se, known. However, air filters are subject to plugging by debris from the air passing through the filter, which eventually increases the restriction to air flow through the filter and decreases the operating performance of an associated device, such as an electronically controlled internal combustion engine being supplied with air through the filter. Frequent filter replacement and shorter service intervals may also be required, which increases the cost of operation. There is a need for an improved air cleaning system and air cleaning method which combine centrifugal separation and air filtration in a manner to efficiently remove debris from debris laden air while reducing or avoiding the aforementioned problems.

A powered air cleaning system according to the invention has the features as defined in claim 1.

The powered air cleaning system comprises a flow path extending through the system from an air inlet to a clean air outlet. A motor-driven fan is located along the flow path to draw particulate debris laden air into the inlet and rotate it about an axis to form a rotating flow that stratifies the debris laden air with the heaviest particles in the outermost orbits of the rotating flow. An ejector port is provided for ejecting particulate debris laden air from the stratified rotating flow in the system to the environment. An air filter is located within the rotating flow and across the flow path upstream of the clean air outlet for filtering air from the innermost orbits of the stratified rotating flow. According to the disclosed example embodiments of this invention, the filter is elongated in the direction of the axis about which the debris laden air is rotated. An outer peripheral surface of the filter within the rotating flow is swept by innermost orbits of the stratified rotating flow for minimizing debris buildup on the filter.

An air cleaning method according to the invention has the features as defined in claim 17.

The air cleaning method comprises drawing particulate debris laden air into the air cleaning system with the motor-driven fan located in the system, forming a rotating flow of the debris laden air in the system to stratify the flow with the heaviest particles in the outermost orbits of the rotating flow, flowing air from the innermost orbits of the rotating flow through the filter enroute to the outlet of the system, and returning particulate debris laden air from the stratified rotating flow in the system to the environment. According to the example embodiments air is supplied to a device with a variable air flow demand, which applies a variable vacuum to the outlet of the air cleaning system, and the method further includes operating the motor-driven fan to maintain positive air flow pressure in the system to return particulate debris laden air to the environment from the system at all rates of air flow demand by the device. The positive air flow pressure, acting on the filter of the system located within the rotating flow, keeps debris buildup on the filter to a minimum. Accordingly, the system self-cleans its air filter.

In use, the ejector port of the system is located radially outward of the outermost orbits of the rotating flow, in the form of an ejector slot which extends the length of the air filter. This arrangement helps in subjecting the air filter to a slight positive pressure, reducing restriction to the engine or apparatus the air cleaning system is installed on and aiding the self cleaning of the air filter.

These and other features and advantages of the present invention will become more apparent from the following description when taken in connection with the accompanying drawings, which show, for purposes of illustration only, two example embodiments in accordance with the present invention

### BRIEF DESCRIPTION OF THE DRAWINGS

Fig. 1 is a perspective view from the front, inlet end, and to one side, of a powered air cleaning system/apparatus according to a first, example embodiment.
Fig. 2 is a perspective view from the back, outlet end, and to one side, of the air cleaning system of Fig. 1, shown, schematically, connected to an air intake of a device with a variable air flow demand.
Fig. 3 is a view of a system similar to Fig. 1 with portions of the housing cut away to show components within the housing.
Fig. 4 is a view of the system similar to Fig. 2 with portions of the housing cut away to depict components inside the housing.
Fig. 5 is a view of the system like Fig. 1 except with a portion of the housing removed and with the filter in the system removed to show the clean air outlet orifice through the back, outlet end of the housing.
Fig. 6 is a perspective view of the system like Fig. 1 but with the detachable motorized fan housing and filter housing forming the system housing being separated from one another.
Fig. 7 is a detailed view of a portion of the joined detachable motorized fan housing and filter housing having a removable joining clip thereof as shown in Fig. 5.
Fig. 8 is a perspective view from the front, inlet end, and to one side, of the detachable motorized fan housing of the system of Fig. 1.
Fig. 9 is a perspective view from the back, outlet end of the detachable motorized fan housing system of Fig. 1.
Fig. 10 is a perspective view of a main primary air filer element used in the system of Fig. 1.
Fig. 11 is a perspective view of a secondary safety air filter element optionally used in the system of Fig. 1 inside of the main primary air filter element.
Fig. 12 is a perspective view of the filter housing from the front end with no filter installed therein.
Fig. 13 is a perspective view of the filter housing from the back, outlet end thereof with no filter installed.
Fig. 14 is a perspective view of the filter housing like Fig. 12 but with the optional safety filter installed.
Fig. 15 is a perspective view of the filter housing like Fig. 13 but with the main filter shown installed therein.
Fig. 16 is a perspective view from the back, outlet end, and to one side, of a second example embodiment of the air cleaning system/apparatus of the invention wherein the filter housing has a solid rear panel about the clean air outlet and an outer cylindrical wall, with a long ejection slot the length of the air filter.
Fig. 17 is a schematic, cross-sectional view taken at a right angle to the axis A-A of either of the disclosed embodiments, showing the provision of a debris strake connected to the air filter and extending the length of the filter to help channel the debris in the rotating flow of debris laden air away from the filter to the outer wall of the filter housing.

### BEST MODE FOR CARRING OUT THE INVENTION

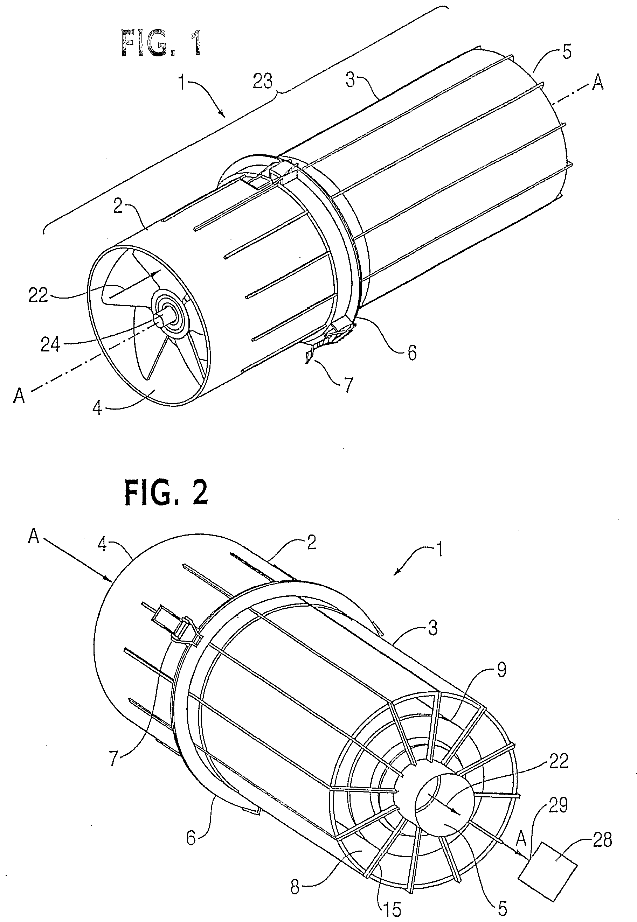

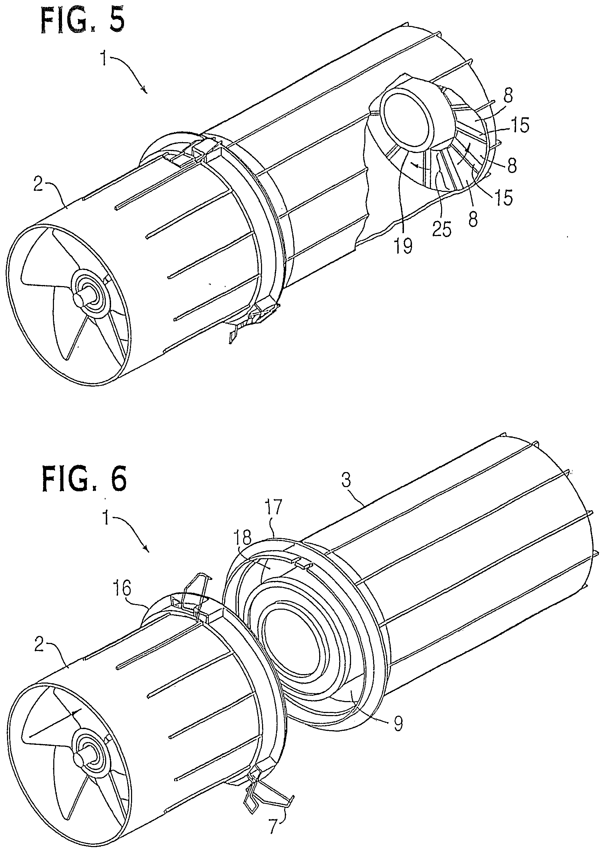

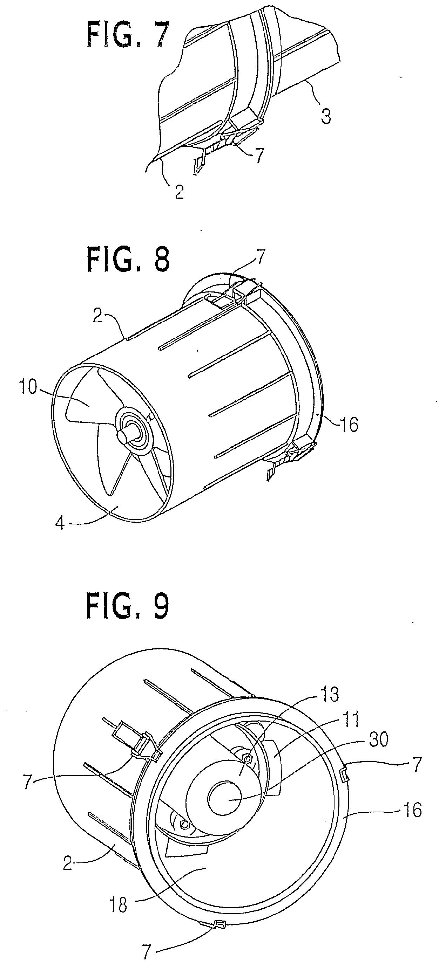

Referring now to the drawings, a powered air cleaning system or apparatus 1, Figs. 1-6, according to a first example embodiment is shown connected to the air intake 29 of a device 28, such as an internal combustion engine or other device requiring a supply of clean air, as shown schematically in Fig. 2. The system comprises a flow path 22 extending through the system from an air inlet 4 to a clean air outlet 5 which supplies clean air to the air intake 29 of device 28. The flow path is located within a generally cylindrical housing 23 of the system. Housing 23 is formed by two detachable components - motorized fan housing 2 and filter housing, 3 which are detachably connected to one another at a service flange assembly 6 by joining clips 7, see Fig. 7. For this purpose each of the housings 2 and 3 has a joining flange, 16 and 17, respectively. The housings 2 and 3 are shown detached from one another in Fig. 6 and shown separately in Figs. 8 and 9, and 12 and 13, respectively.

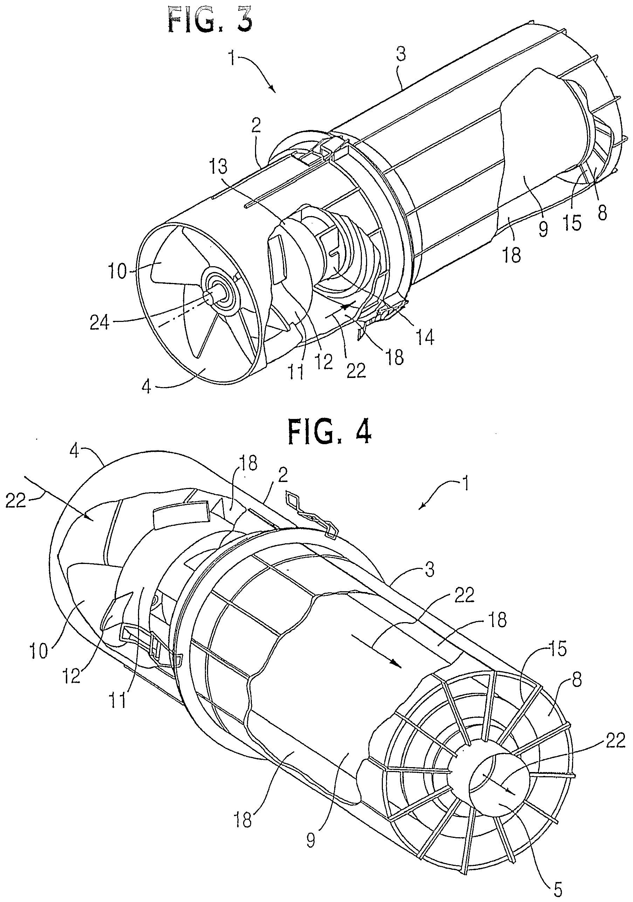

A motor-driven fan 24, comprising a fan blade 10 mounted on the output shaft of an electric motor 13, is located along the flow path 22 to draw particulate debris laden air into the inlet 4 and rotate it about an axis A-A to form a rotating flow in the system that stratifies the debris laden air with the heaviest particles in the outermost orbits of the rotating flow. A compression assembly 11 in the form of an angled louver/motor mount assembly with fixed louvers or vanes 12 is located within the fan housing 2 downstream of the fan blade 10. The compression assembly compresses the volume of the rotating flow of debris laden air drawn into the system inlet to increase the air velocity and centrifugal force acting on the airborne articles. The motor-driven fan 24 is supported at motor 13 thereof within the fan housing by way of the angle louver/motor mount assembly 11 as seen in Figs. 3, 4, 8 and 9.

A separator-ejector chamber 18 is provided in the flow path of the air cleaning system downstream of the angled louver/motor mount assembly, Figs. 3-6, 9 and 15. The outermost orbits of the rotating flow pattern of debris laden air ride on the outer wall 27 of the separator-ejector chamber until reaching an annular ejector port 25 formed about the outlet 5 in the outlet end of the housing radially outward of the clean air outlet. The ejector port is formed by a series of circumferential radial 20 ejection slots 8 separated by strakes 15. The ejector port ejects particulate debris laden air from the stratified rotating flow in the system to the environment.

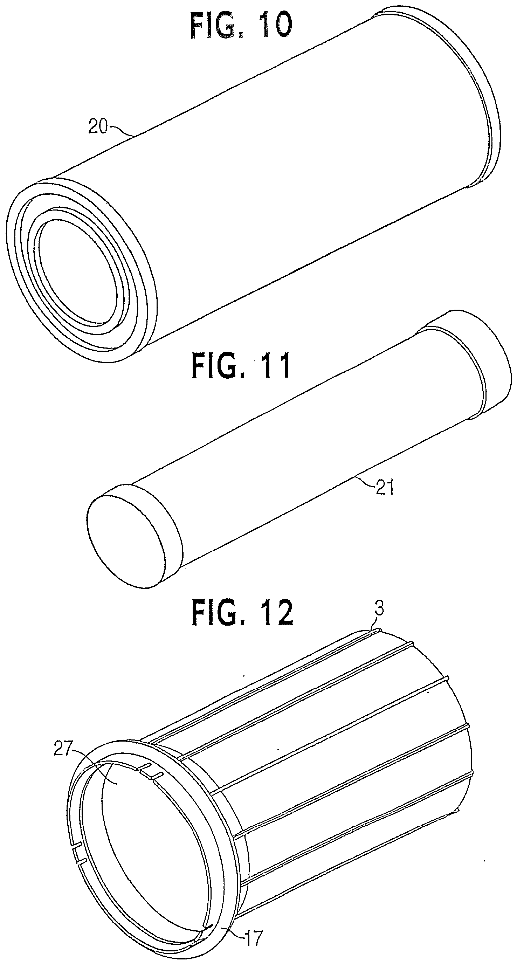

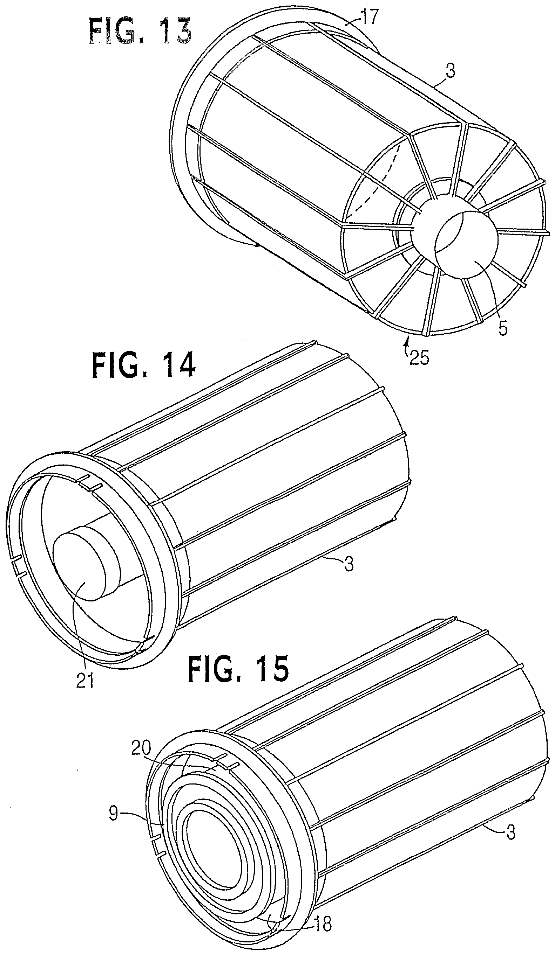

An air filter 9, Figs. 2-4, 6 and 15, in the form of a filter package of at least a main primary air filter element 20, Figs. 10 and 15, and optionally a secondary safety air filter element 21, Figs. 11 and 14, located within the filter element 20, is located within the rotating flow and across the flow path upstream of the outlet for filtering air from the innermost orbits of the stratified rotating flow in the system as the air flows to the clean air outlet 5. The filter 9 is elongated in the direction of and extends along the central longitudinal axis A-A of the generally cylindrical housing 23 in the 5 separator-ejector chamber from the outlet end, where it is mounted on clean air outlet orifice 19, Fig. 5. The upstream end of the filter 9 is supported by a filter compression bracket 14 connected to a support flange 30, Fig. 9, on the end of motor 13.

Debris buildup on the outer surface of the filter 9 is minimized by locating the filter within the rotating flow of the debris laden air in the separator-ejector chamber 18 and by returning particulate debris laden air from the stratified rotating flow in chamber 18 unrestricted through the ejector port 25 at the end of the chamber, e.g., without disrupting the stratified rotating flow in the chamber. The self cleaning action on the filter 9 has also been found to be enhanced, in supplying air to the air intake 29 of a device 28 having a cyclic air flow demand, such as an internal combustion engine which applies a variable vacuum to the outlet 5 of the system, by operating the motor-driven fan to maintain positive air flow pressure on the outer surface of the filter and to return debris laden air to the environment from the system at all rates of air flow demanded by the device. The air cleaning system 1 is designed to generate a much larger air flow than the engine or apparatus 28 upon which it is installed requires, thereby providing a consistent positive air flow pressure to the filter keeping debris buildup on the air filter to a minimum and providing a powerful air flow out of the 360° ejection port 25 formed by the series of radial ejection slots 8 located at the end of the separator-ejector chamber.

The air cleaning system and air cleaning method of the invention make it possible to maintain low air filter restriction throughout normal service intervals for internal combustion engines and other apparatus by significantly extending air filter life over current service intervals. While the air cleaning system and air cleaning method have been described specifically for use in supplying clean air to an internal combustion engine, the invention is not limited to such a use but has wide application for a variety of devices requiring a supply of clean air including ventilation systems, heat exchangers, air compressors, and heating and air conditioning systems.

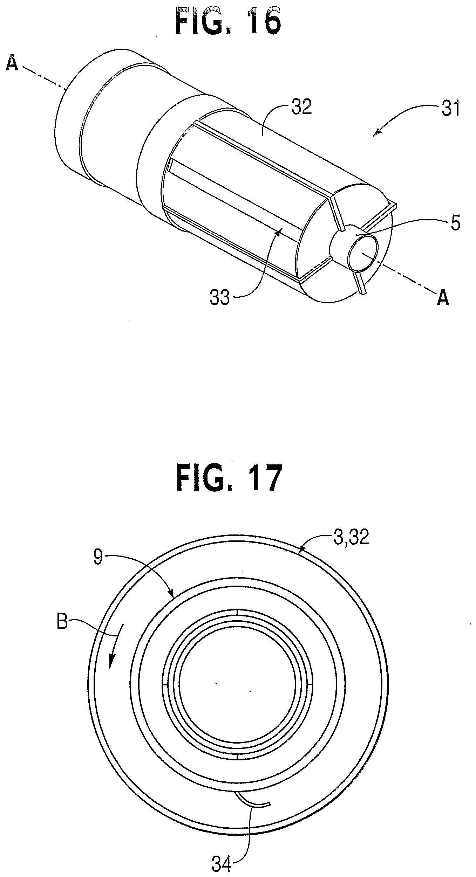

A second example embodiment of the powered air cleaning system or apparatus 31 of the invention shown in Fig. 16 is like the system or apparatus 1 of the first example embodiment except for the filter housing, 32 in Fig. 16. That is, instead of providing the ejector port in the outlet end of the filter housing radially outward of the clean air outlet as in the first example embodiment, in the filter housing 32 the ejector port 33 is located radially outward of the outermost orbits of the rotating flow opposite the air filter. In particular, the ejector port 33 is in the form of a slot in the outer wall of the separator-ejector chamber of the filter housing, the slot extending the length of the air filter. The outlet end of the housing 32 has a solid panel, e.g. is closed, about the clean air outlet 5.

Thus, instead of the debris being allowed to stay in its stratified state for the length of the housing until it is ejected at the rear of the system or apparatus as in the first example embodiment, in the system or apparatus 31 with filter housing 32, as the debris hits the outer orbits of the separation pattern, it is immediately ejected from the rotating flow and the system or apparatus through the ejector slot 33. This feature facilitates directing the debris away from the system or apparatus and channeling the debris away from the device, such as an internal combustion engine, on which the system or apparatus is installed. The air filter within the filter housing 32 can also advantageously be subjected to the slight positive pressure during use, reducing restriction to the engine or other device on which the system or apparatus is installed.

Another feature of the invention shown in Fig. 17 can be used with each of the example embodiments. This involves the provision of a debris strake 34 on the outer periphery of the air filter 9. The strake 34 extends longitudinally the length of the air filter and extends outwardly from the outer periphery of the filter in a direction of the rotating flow, shown by arrow B in Fig. 17, for channeling debris in the rotating flow adjacent the air filter away from the filter to the outermost orbits of the rotating flow for ejection from the system.

While we have shown and described only two embodiments in accordance with the present disclosure, it is understood that the same is not limited thereto, but is susceptible to numerous changes and modifications as known to the skilled in the art. For example, the powered air cleaning systems of the invention can be used without the air filter 9 (not according to the invention) to supply air to a device where centrifugal separation of debris from debris laden air and withdrawal of air from the innermost orbits of the rotating flow in the system by a vacuum from the device at the outlet of the system provides satisfactory cleaning. In this regard, it is noted that the positive pressure in the device maintains flow through the ejector port of the system while the pressure at the clean air outlet remains essentially neutral, with or without air filter 9. The device draws clean air from the clean air outlet in accordance with its demand, e.g., vacuum pull applied to the clean air outlet of the system. Therefore, we do not wish to be limited to the details shown and described herein, but instead to cover all such changes and modifications as are encompassed by the scope of the appended claims.

## Claims

1. A powered air cleaning system comprising:
a generally cylindrical housing (23) having a central longitudinal axis (A-A) and an inlet (4) and an outlet (5) at respective axial ends of the housing;
a flow path (22) extending through the system from an inlet to an outlet;
a motor-driven fan (24) located along the flow path to draw particulate debris laden air into the inlet and rotate it about the axis to form a rotating flow that stratifies the debris laden air with the heaviest particles in the outermost orbits of the rotating flow;
an ejector port (33) for ejecting particulate debris laden air from the stratified rotating flow in the system; and
an air filter (9) located within the housing and across the flow path upstream of the outlet for filtering air from the innermost orbits of the stratified rotating flow, the air filter being elongated in the direction of the axis;
**characterized in that**
the ejector port is arranged in the generally cylindrical outer wall of the housing radially outward from the air filter and is in the form of an ejector slot which extends the length of the air filter.

2. The air cleaning system according to claim 1, further comprising a compression assembly for compressing the volume of the rotating flow of debris laden air to increase the air velocity and centrifugal force acting on the airborne particles, and a separator-ejector chamber in the flow path downstream of the compression assembly, the outermost orbits of the rotating flow riding on the outer wall of the separator-ejector chamber, the ejector port being located in the in the outer wall of the separator-ejector chamber and wherein the filter is located centrally within a separator-ejector chamber in the flow path of the air cleaning system.

3. The air cleaning system according to claim 1, wherein the ejector port is elongated in a direction along the length of the elongated filter.

4. The air cleaning system according to claim 1, wherein an outer peripheral surface of the elongated filter is cylindrical.

5. The air cleaning system according to claim 1, further comprising a compression assembly for compressing the volume of the rotating flow of debris laden air to increase the air velocity and centrifugal force acting on the airborne particles.

6. The air cleaning system according to claim 5, wherein the compression assembly provides support for the motor-driven fan.

7. The air cleaning system according to claim 5, wherein the compression assembly includes a plurality of stationary vanes in the flow path.

8. The air cleaning system according to claim 5, further comprising a separator-ejector chamber in the flow path downstream of the compression assembly, the ejector port being located in the outer wall of the separator ejector chamber.

9. The air cleaning system according to claim 8, wherein said filter is located centrally within said separator-ejector chamber.

10. The air cleaning system according to claim 1, further comprising a generally cylindrical housing, said inlet and said outlet being arranged at respective ends of said housing and said flow path extending through housing.

11. The air cleaning system according to claim 10, wherein said ejector port is arranged in a generally cylindrical outer wall of the housing radially outward from the air filter.

12. The air cleaning system according to claim 11, wherein said filter extends along a central longitudinal axis of the generally cylindrical housing from the outlet end thereof and the ejector port is in the form of an ejector slot which extends the length of the air filter.

13. The air cleaning system according to claim 12, further comprising a bracket for supporting within the housing an end of the filter remote from the outlet end of the housing.

14. The air cleaning system according to claim 1, further comprising a debris strake connected to the air filter for channelling debris away from the filter to the outermost orbits of the rotating flow.

15. The air cleaning system according to claim 1, wherein the motor-driven fan is operable to maintain positive air flow pressure to eject debris laden air from the stratified rotating flow in the system at all rates of air flow through the system.

16. The air cleaning system according to claim 15, wherein the system outlet is connected to an air intake of an internal combustion engine, or ventilation system.

17. An air cleaning method comprising:
drawing particulate debris laden air into an air cleaning system with a motor-driven fan located in the system;
forming a rotating flow of the debris laden air in the system at a positive air flow pressure to stratify the flow with the heaviest particles in the outermost orbits of the rotating flow;
ejecting particulate debris laden air from the outermost orbits of the stratified, positively pressured rotating flow in the system through an ejector port located radially outward of the outermost orbits of the rotating flow the ejector port being in the form of a slot in a housing containing the rotating flow, the slot extending in a direction traverse to the direction of the rotation of the rotating flow; and
withdrawing air from the innermost orbits of the rotating flow in the system through an air filter and an outlet of the system by applying a vacuum to the outlet, wherein the air filter is swept by the rotating flow to provide a self cleaning action on the filter.

18. The method according to claim 17, including channelling debris away from the filter to the outermost orbits of the rotating flow with a debris strake on the outer periphery of the air filter and extending longitudinally the length of the air filter and extending outwardly from the outer periphery of the air filter in a direction of the rotating flow.

19. The method according to claim 17, wherein said ejecting is performed without disrupting the stratified rotating flow in the system.

20. The method according to claim 17, wherein said ejecting includes flowing stratified rotating flow through an ejector port located radially outward of the outermost orbits of the rotating flow opposite the filter.

21. The method according to claim 17, for use in supplying air to a device with a variable air flow demand which applies a variable vacuum to the outlet of the air cleaning system, the method further including operating the motor-driven fan to maintain positive air flow pressure to eject particulate debris laden air from the rotating flow in the system at all rates of air flow demand by the device and to allow buildup of debris on the filter to be removed at all air flow demands.

22. The method according to claim 21, wherein the device is an internal combustion engine, or ventilation system, which is supplying air from the outlet of the system.

23. The method according to claim 17, including operating the motor-driven fan to maintain the positive air flow pressure to eject particulate debris laden air from the outermost orbits of the stratified rotating flow in the system at all rates of withdrawal of air through the outlet of the system.

## Patentansprüche

1. Angetriebenes Luftreinigungssystem, umfassend:
ein allgemein zylindrisches Gehäuse (23), das eine zentrale Längsachse (A-A) sowie einen Einlass (4) und einen Auslass (5) an jeweiligen axialen Enden des Gehäuses aufweist;
einen Strömungspfad (22), der sich von einem Einlass zu einem Auslass durch das System erstreckt;
einen motorbetriebenen Lüfter (24), der entlang des Strömungspfads angeordnet ist, um mit teilchenförmigen Fremdkörpern beladene Luft in den Einlass einzusaugen und sie um die Achse zu drehen, um einen rotierenden Strom zu bilden, der die mit Fremdkörpern beladene Luft schichtet, wobei sich die schwersten Teilchen in den äußersten Umlaufbahnen des rotierenden Stroms befinden;
eine Ausstoßmündung (33) zum Ausstoßen der mit teilchenförmigen Fremdkörpern beladenen Luft aus dem geschichteten rotierenden Strom in dem System; und
einen Luftfilter (9), der im Inneren des Gehäuses und quer durch den Strömungspfad stromaufwärts des Auslasses angeordnet ist, um Luft aus den innersten Umlaufbahnen des geschichteten rotierenden Stroms zu filtern, wobei der Luftfilter in Richtung der Achse langgestreckt ist;
**dadurch gekennzeichnet, dass**
die Ausstoßmündung in der allgemein zylindrischen Außenwand des Gehäuses radial außerhalb des Luftfilters angeordnet ist und die Form eines Ausstoßschlitzes aufweist, der sich über die Länge des Luftfilters erstreckt.

2. Luftreinigungssystem nach Anspruch 1, ferner umfassend eine Verdichtungsanordnung zum Verdichten des Volumens des rotierenden Stroms der mit Fremdkörpern beladenen Luft, um die Luftgeschwindigkeit und die auf die in der Luft befindlichen Teilchen einwirkende Zentrifugalkraft zu erhöhen, und eine Abscheide- und Ausstoßkammer im Strömungspfad stromabwärts der Verdichtungsanordnung, wobei die äußersten Umlaufbahnen des rotierenden Stroms an der Außenwand der Abscheide- und Ausstoßkammer verlaufen, wobei die Ausstoßmündung in der Außenwand der Abscheide- und Ausstoßkammer angeordnet ist und wobei der Filter mittig im Inneren einer Abscheide- und Ausstoßkammer im Strömungspfad des Luftreinigungssystems angeordnet ist.

3. Luftreinigungssystem nach Anspruch 1, wobei die Ausstoßmündung in einer Richtung entlang der Länge des langgestreckten Filters langgestreckt ist.

4. Luftreinigungssystem nach Anspruch 1, wobei eine äußere Umfangsfläche des langgestreckten Filters zylindrisch ist.

5. Luftreinigungssystem nach Anspruch 1, ferner umfassend eine Verdichtungsanordnung zum Verdichten des Volumens des rotierenden Stroms der mit Fremdkörpern beladenen Luft, um die Luftgeschwindigkeit und die auf die in der Luft befindlichen Teilchen einwirkende Zentrifugalkraft zu erhöhen.

6. Luftreinigungssystem nach Anspruch 5, wobei die Verdichtungsanordnung eine Lagerung für den motorbetriebenen Lüfter bereitstellt.

7. Luftreinigungssystem nach Anspruch 5, wobei die Verdichtungsanordnung eine Vielzahl von stationären Schaufeln im Strömungspfad beinhaltet.

8. Luftreinigungssystem nach Anspruch 5, ferner umfassend eine Abscheide- und Ausstoßkammer im Strömungspfad stromabwärts der Verdichtungsanordnung, wobei die Ausstoßmündung in der Außenwand der Abscheide- und Ausstoßkammer angeordnet ist.

9. Luftreinigungssystem nach Anspruch 8, wobei der Filter mittig im Inneren der Abscheide- und Ausstoßkammer angeordnet ist.

10. Luftreinigungssystem nach Anspruch 1, ferner umfassend ein allgemein zylindrisches Gehäuse, wobei der Einlass und der Auslass an jeweiligen Enden des Gehäuses angeordnet sind und sich der Strömungspfad durch das Gehäuse erstreckt.

11. Luftreinigungssystem nach Anspruch 10, wobei die Ausstoßmündung in einer allgemein zylindrischen Außenwand des Gehäuses radial außerhalb des Luftfilters angeordnet ist.

12. Luftreinigungssystem nach Anspruch 11, wobei sich der Filter entlang einer zentralen Längsachse des allgemein zylindrischen Gehäuses ausgehend von seinem Auslassende erstreckt und die Ausstoßmündung die Form eines Ausstoßschlitzes aufweist, der sich über die Länge des Luftfilters erstreckt.

13. Luftreinigungssystem nach Anspruch 12, ferner umfassend eine Halterung, um ein Ende des Filters fern vom Auslassende des Gehäuses im Inneren des Gehäuses zu halten.

14. Luftreinigungssystem nach Anspruch 1, ferner umfassend einen mit dem Luftfilter verbundenen Fremdkörperfänger, um Fremdkörper vom Filter weg zu den äußersten Umlaufbahnen des rotierenden Stroms zu lenken.

15. Luftreinigungssystem nach Anspruch 1, wobei der motorbetriebenen Lüfter derart betrieben werden kann, dass er einen Luftstrom-Überdruck aufrechterhält, um die mit Fremdkörpern beladene Luft von dem geschichteten rotierenden Strom im System bei allen Luftströmungsgeschwindigkeiten durch das System auszustoßen.

16. Luftreinigungssystem nach Anspruch 15, wobei der Auslass des Systems mit einem Lufteinlass eines Verbrennungsmotors oder Lüftungssystems verbunden ist.

17. Luftreinigungsverfahren, umfassend:
Einsaugen von mit teilchenförmigen Fremdkörpern beladener Luft in ein Luftreinigungssystem, wobei ein motorbetriebener Lüfter in dem System angeordnet ist;
Bilden eines rotierende Stroms der mit Fremdkörpern beladenen Luft in dem System mit einem Luftstrom-Überdruck, um den Strom zu schichten, wobei sich die schwersten Teilchen in den äußersten Umlaufbahnen des rotierenden Stroms befinden;
Ausstoßen der mit teilchenförmigen Fremdkörpern beladenen Luft von den äußersten Umlaufbahnen des geschichteten, einen Überdruck aufweisenden rotierenden Stroms in dem System durch eine Ausstoßmündung, die radial außerhalb der äußersten Umlaufbahnen des rotierenden Stroms angeordnet ist, wobei die Ausstoßmündung die Form eines Schlitzes in einem Gehäuse aufweist, das den rotierenden Strom enthält, wobei sich der Schlitz in einer Richtung quer zur Rotationsrichtung des rotierenden Stroms erstreckt; und
Abziehen von Luft von den innersten Umlaufbahnen des rotierenden Stroms in dem System durch einen Luftfilter und einen Auslass des Systems durch Anlegen eines Unterdrucks an den Auslass, wobei der Luftfilter durch den rotierenden Strom gespült wird, um eine Selbstreinigungswirkung für den Filter bereitzustellen.

18. Verfahren nach Anspruch 17, umfassend das Wegführen von Fremdkörpern vom Filter zu den äußersten Umlaufbahnen des rotierenden Stroms mit einem Fremdkörperfänger am äußeren Umfang des Luftfilters, der sich längs entlang der Länge des Luftfilters erstreckt und sich außerhalb des äußeren Umfangs des Luftfilters in einer Richtung des rotierenden Stroms erstreckt.

19. Verfahren nach Anspruch 17, wobei das Ausstoßen erfolgt, ohne den geschichteten rotierenden Strom in dem System zu unterbrechen.

20. Verfahren nach Anspruch 17, wobei das Ausstoßen das Strömen des geschichteten rotierenden Stroms durch eine Ausstoßmündung beinhaltet, die radial außerhalb der äußersten Umlaufbahnen des rotierenden Stroms gegenüber von dem Filter angeordnet ist.

21. Verfahren nach Anspruch 17 zur Verwendung bei der Zufuhr von Luft zu einer Vorrichtung mit variablem Luftstrombedarf, das einen variablen Unterdruck an den Auslass des Luftreinigungssystems anlegt, wobei das Verfahren ferner das Betreiben des motorbetriebenen Lüfters beinhaltet, um einen Luftstrom-Überdruck aufrechtzuerhalten, um die mit teilchenförmigen Fremdkörpern beladene Luft bei jedem Luftströmungsgeschwindigkeits-Bedarf der Vorrichtung von dem rotierenden Strom in dem System auszustoßen und um zu ermöglichen, dass die Fremdkörper, die sich auf dem Filter aufgebaut haben, bei jedem Luftstrombedarf entfernt werden.

22. Verfahren nach Anspruch 21, wobei es sich bei der Vorrichtung um einen Verbrennungsmotor oder ein Lüftungssystem handelt, der oder das Luft vom Auslass des Systems bereitstellt.

23. Verfahren nach Anspruch 17, beinhaltend das Betreiben des motorbetriebenen Lüfters, um den Luftstrom-Überdruck aufrechtzuerhalten, um die mit teilchenförmigen Fremdkörpern beladene Luft bei allen Geschwindigkeiten des Abzugs von Luft durch den Auslass des Systems von den äußersten Umlaufbahnen des geschichteten rotierenden Stroms in dem System auszustoßen.

## Revendications

1. Système d'épuration d'air motorisé comprenant :
un boîtier généralement cylindrique (23) ayant un axe longitudinal central (A-A) et une entrée (4) et une sortie (5) aux extrémités axiales respectives du boîtier ;
une voie d'écoulement (22) s'étendant à travers le système depuis une entrée jusqu'à une sortie ;
un ventilateur motorisé (24) situé le long de la voie d'écoulement pour prélever l'air chargé de débris particulaires dans l'entrée et le faire tourner autour de l'axe pour former un flux rotatif qui stratifie l'air chargé de débris avec les particules les plus lourdes dans les orbites les plus à l'extérieur du flux rotatif ;
un orifice éjecteur (33) pour éjecter l'air chargé de débris particulaires du flux rotatif stratifié dans le système ; et
un filtre à air (9) situé dans le boitier et en travers de la voie d'écoulement en amont de la sortie pour filtrer l'air provenant des orbites les plus à l'intérieur du flux rotatif stratifié, le filtre à air étant allongé dans le sens de l'axe ;
**caractérisé en ce que** l'orifice éjecteur est disposé dans la paroi extérieure généralement cylindrique du boîtier radialement vers l'extérieur depuis le filtre à air et **en ce qu'**il se présente sous la forme d'une fente d'éjection qui s'étend le long du filtre à air.

2. Système d'épuration d'air selon la revendication 1, comprenant en outre un ensemble de compression pour comprimer le volume du flux rotatif d'air chargé de débris afin d'augmenter la vitesse de l'air et la force centrifuge qui agit sur les particules en suspension, et une chambre de séparateur-éjecteur dans la voie d'écoulement en aval de l'ensemble de compression, les orbites les plus à l'extérieur du flux rotatif montant sur la paroi extérieure de la chambre de séparateur-éjecteur, l'orifice éjecteur étant situé dans la paroi extérieure de la chambre de séparateur-éjecteur, le filtre étant situé au centre de la chambre de séparateur-éjecteur dans la voie d'écoulement du système d'épuration d'air.

3. Système d'épuration d'air selon la revendication 1, dans lequel l'orifice éjecteur est allongé dans une direction le long de la longueur du filtre allongé.

4. Système d'épuration d'air selon la revendication 1, dans lequel une surface périphérique extérieure du filtre allongé est cylindrique.

5. Système d'épuration d'air selon la revendication 1, comprenant en outre un ensemble de compression pour comprimer le volume du flux rotatif d'air chargé de débris afin d'augmenter la vitesse de l'air et la force centrifuge qui agit sur les particules en suspension.

6. Système d'épuration d'air selon la revendication 5, dans lequel l'ensemble de compression vient soutenir le ventilateur motorisé.

7. Système d'épuration d'air selon la revendication 5, dans lequel l'ensemble de compression comprend une pluralité d'ailettes fixes dans la voie d'écoulement.

8. Système d'épuration d'air selon la revendication 5, comprenant en outre une chambre de séparateur-éjecteur dans la voie d'écoulement en aval de l'ensemble de compression, l'orifice éjecteur étant situé dans la paroi extérieure de la chambre de séparateur-éjecteur.

9. Système d'épuration d'air selon la revendication 8, dans lequel ledit filtre est situé au centre de ladite chambre de séparateur-éjecteur.

10. Système d'épuration d'air selon la revendication 1, comprenant en outre un boîtier généralement cylindrique, ladite entrée et ladite sortie étant situées aux extrémités respectives dudit boîtier et ladite voie d'écoulement s'étendant à travers le boîtier.

11. Système d'épuration d'air selon la revendication 10, dans lequel ledit orifice éjecteur est disposé dans une paroi extérieure généralement cylindrique du boîtier radialement vers l'extérieur depuis le filtre à air.

12. Système d'épuration d'air selon la revendication 11, dans lequel ledit filtre s'étend le long d'un axe longitudinal central du boîtier généralement cylindrique depuis l'extrémité de sortie de ce dernier, et dans lequel l'orifice éjecteur se présente sous la forme d'une fente d'éjection s'étendant le long du filtre à air.

13. Système d'épuration d'air selon la revendication 12, comprenant en outre un support pour soutenir dans le boîtier une extrémité du filtre à l'écart de l'extrémité de sortie du boîtier.

14. Système d'épuration d'air selon la revendication 1, comprenant en outre une virure de débris raccordée au filtre à air pour acheminer les débris en dehors du filtre vers les orbites les plus à l'extérieur du flux rotatif.

15. Système d'épuration d'air selon la revendication 1, dans lequel le ventilateur motorisé peut être utilisé pour maintenir une pression de flux d'air positive pour éjecter l'air chargé de débris depuis le flux rotatif stratifié dans le système à toutes les vitesses du flux d'air dans le système.

16. Système d'épuration d'air selon la revendication 15, dans lequel la sortie du système est raccordée à une entrée d'air d'un moteur à combustion interne ou d'un système de ventilation.

17. Procédé d'épuration d'air comprenant :
extraire l'air chargé de débris particulaires dans un système d'épuration d'air avec un ventilateur motorisé situé dans le système ;
former un flux rotatif d'air chargé de débris dans le système à une pression de flux d'air positive pour stratifier le flux avec les particules les plus lourdes dans les orbites les plus à l'extérieur du flux rotatif ;
éjecter l'air chargé de débris particulaires des orbites les plus à l'extérieur du flux rotatif stratifié sous pression positive dans le système à travers un orifice éjecteur situé radialement vers l'extérieur des orbites les plus à l'extérieur du flux rotatif, l'orifice éjecteur se présentant sous la forme d'une fente dans un boîtier contenant le flux rotatif, la fente s'étendant dans une direction transversale au sens de rotation de flux rotatif ; et
prélever l'air des orbites les plus à l'intérieur du flux rotatif dans le système par un filtre à air et une sortie du système en appliquant un vide au niveau de la sortie, dans lequel le filtre à air est balayé par le flux rotatif pour fournir une action autonettoyante au niveau du filtre.

18. Procédé selon la revendication 17, incluant acheminer les débris hors du filtre vers les orbites les plus à l'extérieur du flux rotatif avec une virure sur la périphérie extérieure du filtre à air et s'étendant longitudinalement le long du filtre à air et s'étendant vers l'extérieur depuis la périphérie extérieure du filtre à air dans le sens du flux rotatif.

19. Procédé selon la revendication 17, dans lequel ladite éjection est effectuée sans interrompre le flux rotatif stratifié dans le système.

20. Procédé selon la revendication 17, dans lequel ladite éjection consiste à faire écouler le flux rotatif stratifié à travers un orifice éjecteur situé radialement vers l'extérieur des orbites les plus à l'extérieur du flux rotatif à l'opposé du filtre.

21. Procédé selon la revendication 17, destiné à être utilisé pour amener de l'air à un dispositif avec une demande de flux d'air variable qui applique un vide variable sur la sortie du système d'épuration d'air, le procédé consistant en outre à faire fonctionner le ventilateur motorisé pour maintenir une pression de flux d'air positive pour éjecter l'air chargé de débris particulaires du flux rotatif dans le système à toutes les vitesses de demande de flux d'air par le dispositif et pour permettre d'éliminer l'accumulation de débris sur le filtre à toutes les demandes de flux d'air.

22. Procédé selon la revendication 21, dans lequel le dispositif est un moteur à combustion interne ou un système de ventilation qui apporte de l'air depuis la sortie du système.

23. Procédé selon la revendication 17, incluant faire fonctionner le ventilateur motorisé pour maintenir une pression de flux d'air positive pour éjecter l'air chargé de débris particulaires des orbites les plus à l'extérieur du flux rotatif stratifié dans le système à toutes les vitesses d'extraction d'air par la sortie du système.
